# EUROPEAN PATENT SPECIFICATION

(11) **EP 3 416 923 B1**
(45) Date of publication and mention of the grant of the patent: **07.04.2021**
(21) Application number: 17706192.6
(22) Date of filing: 16.02.2017
(51) Int. Cl.: C04B 28/14

(54) **GYPSUM BOARD**
GIPSPLATTE
PLAQUE DE PLÂTRE

(30) Priority: 19.02.2016 EP 16290040
(43) Date of publication of application: 26.12.2018
(73) Proprietor: Etex Building Performance International SAS, 84915 Avignon (FR)
(72) Inventor: LECLERCQ, Claude, 84210 Pernes les Fontaines (FR); LOPEZ, Pauline, 84000 Avignon (FR); PEYRON, Pierre, 84260 Sarrians (FR); MARTINI, Yves, 68170 Rixheim (FR)
(74) Representative: Etex Services NV - Etex IPSC
(86) International application number: PCT/EP2017/053507
(87) International publication number: WO 2017/140784

(56) References cited:
- US-A1- 2006 068 186
- US-A1- 2006 147 681
- US-A1- 2008 009 565
- US-A1- 2013 102 705
- US-A1- 2014 113 128

## Description

### Field of the invention

The present invention relates to gypsum boards and methods to make such gypsum boards.

### Background of the invention

Gypsum boards, also known as drywall or plasterboards, are well known in the art. Gypsum boards suitable for use in wet conditions such as in kitchens and bathrooms, or even outdoors, are less common.

WO2006024549 discloses a gypsum board having facers which increase the water-resistance of the boards. However, current improvements in the water resistance of plasterboards typically also result in a worsening of certain mechanical properties, such as racking resistance. On the other hand, plasterboards having an excellent racking resistance typically have a low water resistance. Accordingly, there is a need for plasterboards having good water repellant properties as well as a good racking resistance

US 2008/009565 A1 relates to a method of reducing water in a gypsum slurry.

### Summary of the invention

It is an object of the present invention to provide a gypsum board, or wallboard, having good water repellant properties as well as a good racking resistance. Good water repellant properties means that the gypsum board will not weaken or only weaken to a very little extent when placed in humid conditions, e.g. outdoors or in wet areas such as bathrooms, kitchens, or swimming pool buildings.

The present inventors have found that gypsum boards having surprisingly good water resistance and racking resistance properties can be obtained by providing high-density gypsum boards comprising a water repellant agent, a high content of glass or polyvinyl alcohol fibers, and a fluidizing agent.

The gypsum boards described herein can have enhanced mechanical strength in humid conditions, such as an enhanced racking strength, both for timber frame and steel frame walls. The gypsum boards may be used for external sheathing applications or for internal applications.

More particularly, the gypsum board described herein can be used as a racking board on the external side of walls instead of oriented strand board (OSB). In contrast with OSB, the gypsum board described herein does not require the presence of a rain screen membrane, thanks to its high mechanical resistance in humid conditions. It can also be installed as an inner racking board where wet rooms such as bathrooms are facing the external walls.

In exterior walls with metal frame, the gypsum board described herein could be mounted as a sheathing board both in structural framing construction (SFS) and in infill walls (installed into columns and beams structure). The gypsum board can provide additional stiffness and mechanical resistance to perpendicular wind pressure. Thanks to the mechanical contribution of the product to the metal frame, the wall may resist higher wind load pressure. Moreover, it allows some optimization of the metal frame by including the product contribution in the mechanical calculation. Similarly to timber construction, the product can also be installed on the inner side of the wall where wet rooms are facing the external walls.

The above and other characteristics, features and advantages of the present invention will become apparent from the following detailed description which illustrates, by way of example, the principles of the invention. This description is given for the sake of example only, without limiting the scope of the invention defined by the appended claims 1-8.

### Description of illustrative embodiments

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention. When reference is made to weight percentage (wt%), this is to be understood, unless differently specified, as the weight of the component expressed as percentage over the total weight of the composition in which the component is present.

The term "gypsum" as used herein refers to calcium sulphate dihydrate (DH), of the formula CaSO₄·2H₂O. Gypsum which is present in plasterboards typically is obtained via the hydration of plaster.

The term "plaster" or "stucco" as used herein and in the generally accepted terminology of the art, refers to a partially dehydrated gypsum of the formula CaSO₄·xH₂O, where x can range from 0 to 0.5. The term "plaster" is also referred to herein as "hydratable calcium sulphate". The term "dry weight" when referred to plaster in a plaster composition, refers to the weight of the calcium sulphate including hydration water (i.e. the xH₂O of the above formula), but excluding the gauging water in the composition. Plaster can be obtained via the calcination of gypsum, i.e. the thermal treatment of gypsum in order to remove (a part of) the combined water. For the preparation of plaster, natural or synthetic gypsum may be used. Natural gypsum may be obtained from gypsum rock or gypsum sand. Synthetic gypsum typically originates from flue gas desulphurization (FGD) or phosphonic acid production. Gypsum obtained from FGD is also known as desulphogypsum (DSG).

Plaster wherein x is 0.5 is known as "calcium sulphate hemihydrate" (HH) or "calcium sulphate semihydrate" (SH), i.e. CaSO₄·0.5H₂O. Calcium sulphate HH can occur in different crystalline forms; known as α and β. Calcium sulphate HH is also known as "gypsum plaster" or "plaster of Paris".

Plaster wherein x is 0 is known as "calcium sulphate anhydrite" or "anhydrous calcium sulphate". "Calcium sulphate anhydrite III" (AIII) refers to a dehydrated HH with the potential of reversibly absorbing water or vapor. "Calcium sulphate anhydrite II" (All) refers to the completely dehydrated calcium sulphate (CaSO₄). All is formed at higher temperatures and is preferably not used for the preparation of plasterboard.

Methods for the calcination of gypsum are known in the art and will not be discussed further in this text.

The terms "plasterboard" and "gypsum board" as used herein interchangeably and refer to a panel or board comprising a gypsum core, obtainable from a plaster slurry as described herein. Accordingly, the term "plasterboard" refers to a board or panel which is obtainable via the setting (hydration) of plaster. The term "board" or "panel" as used herein refers to any type of wall, ceiling or floor component of any required size.

The term "alkyl" by itself or as part of another substituent, refers to a linear or branched saturated hydrocarbon group joined by single carbon-carbon bonds.

When a subscript is used herein following a carbon atom, the subscript refers to the number of carbon atoms that the named group may contain. Thus, for example, C₁₋₄alkyl means an alkyl of one to four carbon atoms. Examples of C₁₋₄alkyl groups are methyl, ethyl, propyl, isopropyl, butyl, isobutyl and tert-butyl.

The term "alkylene" by itself or as part of another substituent, refers to alkyl groups that are divalent, i.e., with two single bonds for attachment to two other groups. Alkylene groups may be linear or branched and may be substituted as indicated herein. Nonlimiting examples of alkylene groups include methylene (-CH₂-), ethylene (-CH₂-CH₂-), and methylmethylene (-CH(CH₃)-).

"C₁₋₆alkylene", by itself or as part of another substituent, refers to C1-6alkyl groups that are divalent, i.e., with two single bonds for attachment to two other groups. Alkylene groups may be linear or branched and may be substituted as indicated herein.

The term "aryl", by itself or as part of another substituent, refers to a polyunsaturated, aromatic hydrocarbyl group having a single ring (i.e. phenyl) or multiple aromatic rings fused together (e.g. naphthalene), or linked covalently; wherein at least one ring is aromatic. Typical aryl groups may contain 6 to 10 atoms and are referred to as "C₆₋₁₀aryl". Aryl rings may be unsubstituted or substituted with from 1 to 4 substituents on the ring. Aryl may be substituted with halo, cyano, nitro, hydroxy, carboxy, amino, acylamino, alkyl, heteroalkyl, haloalkyl, phenyl, aryloxy, alkoxy, heteroalkyloxy, carbamyl, haloalkyl, methylenedioxy, heteroaryloxy, or any combination thereof. Examples of C₆₋₁₀aryl include phenyl, naphthyl, indanyl, or 1,2,3,4-tetrahydro-naphthyl.

The term "alkoxy" as used herein refers to a substituent of formula -OR^{a}, wherein R^{a} is alkyl. The term C₁₋₆alkoxy means a subsituent of formula -OR^{b}, wherein R^{b} is C₁₋₆alkyl.

The term "arylene" by itself or as part of another substituent, refers to aryl groups that are divalent, i.e., with two single bonds for attachment to two other groups. For example, the term "C₁₋₆alkylC₆₋₁₀arylene", by itself or as part of another substituent, refers to a C₆₋₁₀aryl group as defined herein, wherein a hydrogen atom is replaced by a C₁₋₆alkyl as defined herein.

The term "monovalent metal" as used herein refers to a metal refers to a metal which is part of an ionic bond wherein said metal forms an ion having a charge of +1. Examples of monovalent metals are the metals (thus not including hydrogen) of Group 1 of the IUPAC periodic table. Preferred monovalent metals are Na, K, and Li.

The term "divalent metal" as used herein refers to a metal refers to a metal which is part of an ionic bond wherein said metal forms an ion having a charge of +2. Examples of divalent metals are the metals of Group 2 of the IUPAC periodic table. Preferred divalent metals are Mg and Ca.

The term "trivalent metal" as used herein refers to a metal refers to a metal which is part of an ionic bond wherein said metal forms an ion having a charge of +3. Examples of trivalent metals are Al and Fe.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Provided herein is a gypsum board, also referred to herein as "board" or "plasterboard" as defined in independent claim 1.

Gypsum boards are well known in the art and typically comprise a core comprising gypsum, wherein the core typically is pressed between a pair of facers or liners. The dimensions and shape of the gypsum board described herein are not critical. Typically, the gypsum board will have a standard thickness ranging from 5 to 100 mm. In preferred embodiments, the gypsum board has a thickness of about 12.5 mm. The gypsum board typically has a rectangular shape, although other shapes may also be envisaged.

The gypsum board according to the first aspect of the present invention may be used outdoor or in wet areas. The product is particularly suitable to be used in external walls having a timber frame or metal frame as a support.

The gypsum board comprising a core, characterised in that said core has a bulk density of at least 1100 kg/m³ and comprises:
- from 70 wt% to 97 wt% gypsum;
- one or more polycarboxylate ether fluidizing agents, in a total amount of at least 6000 g/m³;
- at least 2500 g/m³ of a polysiloxane;
- at least 10000 g/m³ of one or more clay minerals; and
- at least 3200 g/m³ of glass fibers.

The gypsum core of the plasterboard described herein typically comprises gypsum as its main component. The core comprises from 70 wt% to 97 wt% gypsum, more particularly from 70 wt% to 95 wt% gypsum, for example from 85 wt% to 92 wt% gypsum. The gypsum concentrations referred to herein refer to the pure gypsum content, i.e. excluding impurities. The pure gypsum content of the core can be determined via Differential Scanning Calorimetry/Thermogravimetric Analysis (DSC/TGA).

The gypsum may be of synthetic or natural origin. Preferably, the gypsum is obtained from a high purity plaster (i.e. having a high plaster content, and preferably a high calcium sulphate HH content), preferably a plaster having a calcium sulphate HH content of at least 93 wt% (based on the total weight of the plaster). The present inventors have found that gypsum obtained from such plasters provide particularly good mechanical properties. In particular embodiments, the gypsum is at least partially obtained from the hydration of synthetic plaster, more particularly plaster which was obtained through the calcination of synthetic gypsum, preferably DSG. Synthetic plaster typically contains few impurities (typically less than 5%). In specific embodiments, the plaster is at least partially obtained through the calcination of DSG containing mainly needle-like gypsum crystals. In particular embodiments, the plaster for manufacturing the gypsum core may be obtained from recycled waste gypsum. Typically, such plaster also is of high purity. In certain embodiments the plaster used for manufacturing the gypsum core may be a mixture of plaster obtained from DSG, and plaster obtained from recycled waste gypsum.

The gypsum core of the plasterboard described herein typically has a density which is relatively high. Increasing the board density can increase the board strength. The production of high density boards preferably involves the use of plaster slurries containing relatively low amounts of gauging water. Such slurries typically have a poor flowability. In order to restore the flowability to acceptable levels, a fluidizing agent can be added. Fluidizing agents are also known as "fluidizers", "dispersants", and "plasticizers". The amount of fluidizing agent added may depend on the type of fluidizing agent used, and the desired flowability of the slurry.

Preferred fluidizers are polymers selected from the list consisting of a polycarboxylate ether (PCE) such as polyoxyalkylene polycarboxylates; and a polyphosphonate polyoxyalkylene. Preferably, salts of such polymers are used, such as sodium salts. In particular embodiments, the fluidizers are or comprise members of the list consisting of a polycarboxylate poly(ethylene glycol), and polyphosphonate poly(ethylene glycol).

The core comprises one or more fluidizers which are polycarboxylate ethers (PCEs). This class of fluidizers are effective in a broad concentration range, thereby allowing for a sufficient fluidity of the plaster slurry during the manufacture of the plasterboard, even at very low water to plaster ratios (e.g. less than 0.65). PCEs are water-soluble comb polymers which typically have a (negatively)

charged backbone and uncharged side chains. The backbones can be composed of polymers based on monomers selected from acrylic acid, methacrylic acid, maleic acid, vinyl, allyl and mixtures thereof. The side chains, often being a polyalkylene glycol, may be grafted by either esterification or amidation to the pre-formed backbone bearing carboxylic acid groups or included through copolymerization of backbone monomers with macromonomers carrying a side chain.

The gypsum core of the plasterboard described herein may comprise one type of polycarboxylate ether, or a mixture of different types of polycarboxylate ethers.

In preferred embodiments, the one or more PCEs have a molecular mass ranging from 10,000 Daltons to 400,000 Daltons. In further embodiments, the one or more PCEs have a molecular weight between 20,000 Daltons and 60,000 Daltons.

Examples of suitable PCE compounds and methods for the preparation thereof are described in patent EP2411346 (Lafarge Gypsum), patent US6777517 (Degussa), patent US5798425 (Süddeutsche Kalkstickstoff), patent application US2006/0278130 (United States Gypsum), and patent application WO2012/028668 (Sika).

Examples of suitable commercially available PCEs include, but are not limited to: Ethacryl™ M and Ethacryl™ G (available from Coatex, Arkema Group, France); Viscocrete® G2 (available from Sika AG, Switzerland); neomere®FLOW 580N, neomere®FLOW 570S, and CHRYSO®Fluid Premia 180 (available from Chryso SAS, France); Melflux® 1086L (available from BASF, Germany); and Mighty G21 (available from Kao Specialties Americas).

PCEs are polymers and therefore comprise at least one repeating unit. Often, PCEs are copolymers comprising two or more co-monomers, i.e. different repeating units. The PCEs may comprise random or statistical copolymers, gradient copolymers, alternating copolymers, and/or block copolymers.

In particular embodiments, the one or more fluidizers comprise at least one PCE comprising a repeating unit of Formula (I): 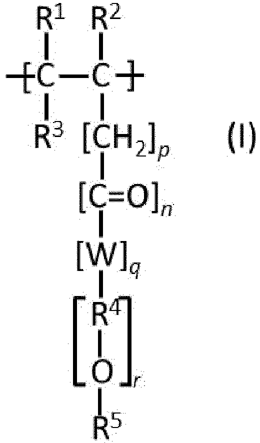 wherein
p is an integer from 0 to 2;
*n* and *q* are independently 0 or 1; preferably *q* is 1 if *n* is 1;
*r* is an integer from 0 to 500, preferably at least 2;
W is oxygen, nitrogen, or a bivalent NH radical; preferably W is oxygen;
R¹, R², and R³ independently are selected from the list consisting of hydrogen, an aliphatic hydrocarbon group comprising 1 to 20 carbon atoms, and -COOR⁸; wherein R⁸ is hydrogen, C₁₋₄alkyl, a monovalent metal, a divalent metal, a trivalent metal, or a (quaternary) ammonium radical; wherein preferably not more than one of R¹, R², and R³ is -COOR⁸; preferably R¹ and R³ are hydrogen;
R⁴ is C₂₋₂₀alkylene, preferably C₂₋₄alkylene; and
R⁵ is hydrogen, C₁₋₂₀alkyl, or a radical of Formula (IIa) or (IIb): 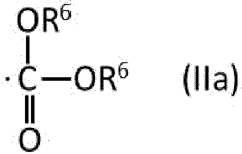 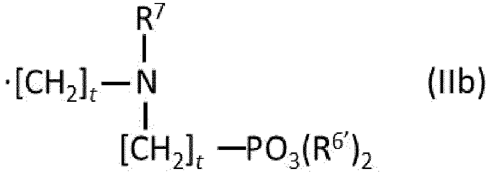
wherein
R⁶ and R⁶ are hydrogen, C₁₋₂₀alkyl, a monovalent metal, a divalent metal, a trivalent metal, or a (quaternary) ammonium radical;
t is an integer from 0 to 18; and
R⁷ is hydrogen, C₁₋₁₈alkyl, or a radical of formula -[CH₂]ₜPO₃(R^{6'})₂, wherein *t* and R^{6'} have the same meaning as defined above.

In particular embodiments, the one or more fluidizers may comprise at least one PCE comprising a repeating unit of Formula (I), wherein: p is an integer from 0 to 2; *n* and *q* are 1; *r* is an integer from 2 to 250; W is oxygen; R¹, R², and R³ are hydrogen; R⁴ is C₂₋₄alkylene; and R⁵ has the same meaning as defined above.

In particular embodiments, the one or more fluidizers may comprise at least one PCE comprising a repeating unit of Formula (I), wherein: p is an integer from 0 to 2; *n* is 0; *q* is 1; *r* is an integer from 2 to 250; W is oxygen; R¹, R², and R³ are hydrogen; R⁴ is C₂₋₄alkylene; and R⁵ has the same meaning as defined above. In further embodiments, p may be 0 or 1.

In particular embodiments, the one or more fluidizers may comprise a PCE comprising at least one repeating unit which satisfies Formula (III): 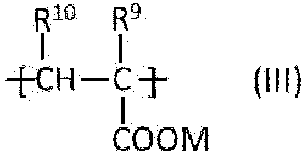 wherein
R⁹ is hydrogen or C₁₋₄alkyl;
R¹⁰ is hydrogen, C₁₋₄alkyl, or -COOM'; and
M and M' are independently selected from is hydrogen, C₁₋₆alkyl, or a monovalent metal, a divalent metal, or a trivalent metal. Preferably, M is Na or K.

In preferred embodiments, R¹⁰ is hydrogen, and M is Na or K. In further preferred embodiments, R⁹ and R¹⁰ are hydrogen; and M is Na or K.

In particular embodiments, the one or more fluidizers may comprise at least one PCE, which is a polymer comprising a repeating unit of Formula (III) shown above, wherein: R⁹ is hydrogen;
R¹⁰ is a radical of formula -COOM', wherein M' is Na or K; and
M is a radical of formula -[CH₂CH₂O]*ₚ*CH₃ wherein p is an integer from 1 to 100.

In preferred embodiments, the one or more fluidizers may comprise a PCE having a repeating unit which satisfies Formula (IV) 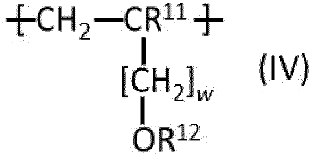
wherein R¹¹ is hydrogen, or a saturated or unsaturated aliphatic hydrocarbon group comprising 1 to 5 carbon atoms, which may be linear or branched;
w is an integer ranging from 0 to 3, and preferably 0 or 1; and
R¹² is derived from an unsaturated (poly)alkylene glycol ether group, preferably according to Formula (V):

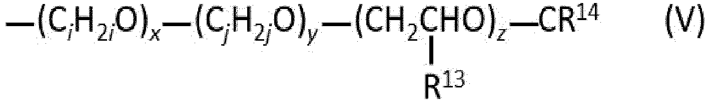

wherein i and j are independently an integer from 2 to 5; preferably at least one of i and j is 2;
x and *y* are independently an integer ranging from 1 to 350;
z is an integer ranging from 0 to 200;
R¹³ is a substituted or non-substituted C₆₋₁₀aryl group, preferably phenyl; and
R¹⁴ is hydrogen, an aliphatic hydrocarbon group comprising 1 to 20 carbon atoms, a radical of Formula (IIa) or (IIb) (wherein R⁶, R^{6'}, and t have the same meaning as defined above), or a group of Formula (IIIa), (IIIb), or (IIIc): 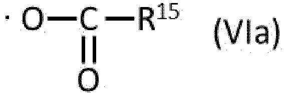 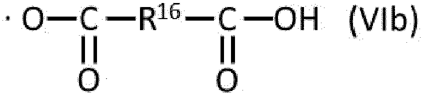 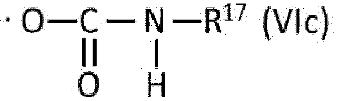 wherein R¹⁵ and R¹⁷ independently are C₁₋₂₀alkyl, C₆₋₁₂aryl, C₇₋₂₀aralkyl, or C₇₋₂₀alkylaryl; and R¹⁶ is C₁₋₂₀alkylene, C₆₋₁₂arylene, C₇₋₂₀aralkylene, or C₇₋₂₀alkylarylene.

In particular embodiments, the one or more fluidizers may comprise a PCE having two or more repeating unit selected from a repeating unit of Formula (I), a repeating unit of Formula (III), and a repeating unit of Formula (IV) as described above.

PCE compounds should comprise at least one repeating unit comprising a carboxyl group, or salt or ester thereof. Preferably, the one or more PCE compound(s) comprise at least 50 wt% of one or more repeating units comprising a carboxyl group, or salt or ester thereof. Preferably, the PCE compound comprises at least one repeating unit:
- of Formula (I) wherein *n* and *q* are 1, W is oxygen; and R¹, R², R³, R⁴, R⁵, p, q, and *r* are as defined above; and/or
- of Formula (III) wherein R⁹, R¹⁰, and M are as defined above.

Preferably, a salt form is used for the carboxyl moieties; most preferably Na and/or K salts.

In particular embodiments, the one or more fluidizers may comprise at least one PCE comprising a repeating unit originating from a monomer selected from:
- unsaturated monomers of monocarboxylic or dicarboxylic acid, such as acrylic acid, methacrylic acid, maleic acid, maleic anhydride, fumaric acid, itaconic acid, itaconic anhydride or citraconic acid, and their salts of monovalent or divalent metals, quaternary ammonium or organic amines;
- esters and diesters of the abovementioned unsaturated monomers of monocarboxylic or dicarboxylic acid having an alcohol functional group having from 1 to 30 carbon atoms;
- amides and diamides of the abovementioned unsaturated monomers of monocarboxylic or dicarboxylic acid having an amine functional group having from 1 to 30 carbon atoms;
- esters and diesters of the abovementioned unsaturated monomers of monocarboxylic or dicarboxylic acid having an alkoxy(poly(alkylene glycol)s) functional group obtained by addition of from 1 to 500 mol of alkylene oxide having from 2 to 18 carbon atoms to the abovementioned alcohols and amines;
- esters and diesters of the abovementioned unsaturated monomers of monocarboxylic or dicarboxylic acid having a glycol functional group possessing from 2 to 18 carbon atoms or possessing from 2 to 500 poly(alkylene glycol)s as molar addition number of the preceding glycols;
- unsaturated sulfonic acids, such as vinylsulphonate, (meth)allylsulphonate, 2-(meth)acryloxyethylsulphonate, 3-(meth)acryloxypropylsulphonate, 3-(meth)acryloxy-2-hydroxypropylsulphonate, 3-(meth)acryloxy-2-hydroxypropyl sulfophenyl ether, 3-(meth)acryloxy-2-hydroxypropyloxysulfobenzoate, 4-(meth)acryloxybutylsulphonate, (meth)acrylamidomethylsulfonic acid, (meth)acrylamidoethylsulfonic acid, 2-methylpropanesulfonic acid (meth)acrylamide and styrenesulfonic acid, or their salts of monovalent or divalent metals, quaternary ammonium or organic amines;
- vinylaromatic compounds, such as styrene, α-methylstyrene, vinyltoluene and p-methylstyrene;
- unsaturated amides, such as (meth)acrylamide, (meth)acrylalkylamide, N-methylol(meth)acrylamide and N,N-dimethyl(meth)acrylamide;
- unsaturated esters, such as vinyl acetate and vinyl propionate;
- unsaturated amines, such as aminoethyl(meth)acrylate, methylaminoethyl (meth)acrylate, dimethylaminoethyl(meth)acrylate, dimethylaminopropyl(meth)-acrylate, dibutylaminoethyl(meth)acrylate and vinylpyridine;
- allyl compounds, such as (meth)allyl alcohol and glycidyl(meth)allyl ether; for which the molar mass of said copolymer is from 15 000 to 250 000 daltons, said copolymer not comprising crosslinking units.

In particular embodiments, the core comprises a fluidizing agent which is a polyoxyalkylene polycarboxylate salt, more particularly a polyoxyethylene polycarboxylate salt or polycarboxylate poly(ethylene glycol), most particularly a polyoxyethylene polycarboxylate sodium salt.

The one or more polycarboxylate ether fluidizing agents in the core of the plasterboards described herein are present in the core in an amount of at least 6000 g/m³.

Many fluidizers are not very efficient when used in high doses. Advantageously, PCE type fluidizers are efficient up to relatively high doses, and their ideal dose may be determined based on cost as well as efficiency. Typically, the core will comprise at most 20000 g/m³ of fluidizers. In preferred embodiments, the core comprises at most 15000 g/m³ of fluidizers, for example about 8000 g/m³ of fluidizers. In particular embodiments, the core comprises the fluidizer(s) in an amount ranging from 2400 g/m³ to 10000 g/m³.

The core of the plasterboard described herein comprises glass fibers. The present inventors surprisingly found that, when used in combination with a water repellant agent, the use of relatively high amounts of glass fibers can allow for obtaining gypsum boards having excellent water resistance and mechanical properties. Within the context of the present invention, fibers are understood to mean elongated bodies with length dimension much greater than width and thickness. Preferably, the length is at least 10, at least 50, or even at least 100 times greater than the width and thickness. The fibers may have a curved or straight shape. Furthermore, the term "fibers" includes monofilaments, split fibers, and stable fibers. The fibers can have a regular or irregular cross section. The shape of the cross section of the fibers may be circular or of another shape.

The glass fibers are present in the core in a total amount of at least 3200 g/m³.

In particular embodiments, the core may further comprise fibers other than glass fibers, such as poly(vinyl alcohol) (PVA) fibers. The presence or absence of other fibres will typically depend on the desired properties and application of the plasterboard. In particular embodiments, the core does not comprise fibers other than glass fibers.

The (glass) fibers typically have an average (number average) length ranging from 3 mm to 24 mm, preferably ranging from 10 mm to 15 mm; for example about 13 mm. The (glass) fibers preferably have a diameter ranging from 5 µm to 25 µm, more preferably ranging from 8 µm and 20 µm, most preferably ranging from 10 µm to 15 µm; for example about 13 µm.

Preferably, the glass fibers are made of alumino-borosilicate glass with less than 1 wt% alkali oxides; such glass compositions are known as "E-glass". However, it is envisaged that also other glass compositions may be used.

The core comprises at least 3200 g/m³ glass fibers, preferably at least 4000 g/m³. In further embodiments, the core comprises glass fibers in a range of 3200 g/m³ to 12000 g/m³; preferably in the range of 4000 g/m³ to 10400 g/m³. In particular embodiments, the core comprises glass fibers in a range of 3200 g/m³ to 10000 g/m³. In further embodiments, the core comprises glass fibers in a range of 4000 g/m³ to 10000 g/m³.

The core of the plasterboard described herein comprises one or more water repellant agents, which are dispersed in the core matrix. The term "water repellant agent" refers to a component or compound which is present in the plaster slurry for the preparation of the core, and which thereby increase the hydrophobicity of the core and/or can improve the hydrofugation properties of the core.

The water repellant agent typically is a hydrophobic material. In present context, and as commonly understood, the term "hydrophobic" connotes a property of a material, reflecting its water repellency. For present purposes, a hydrophobic material is defined as a material which, when provided as a flat surface, exhibits a water contact angle of at least 90°, and upwards to 180°.

The gypsum board described herein can have excellent water repellency properties, even with relatively low amounts of water repellant agents. The gypsum board comprises at least 2500 g/m³ of a polysiloxane. In particular embodiments, the water repellant agent(s) may be present in a total amount of 1500 g/m³ to 6000 g/m³; preferably in a total amount of 2400 g/m³ to 5600 g/m³; even more preferably in the range of 2400 g/m³ to 4800 g/m³.

The water repellent agent(s) are (hydrophobic) silicones. Further water repellant agents may include, but are not limited to: waxes; thermoplastic synthetic resins such as poly(vinyl acetate); poly(vinyl chloride); and a copolymer of vinyl acetate and vinyl chloride and acrylic resins.

In preferred embodiments, the one or more water repellant agents may comprise or be an organopolysiloxane, for example a polyalkylhydrosiloxane. Particularly preferred polyalkylhydrosiloxanes are polymethylhydrosiloxanes (PMHS). In particular embodiments, the water repellant agent(s) comprise a polysiloxane which is a linear, cyclized or branched macromolecular water-repellant compound containing polysiloxane units, each of which is chosen from the group consisting of the groups (R¹R²R³SiO_{1/2}), (R¹R²SiO) and (R²SiO_{3/2}), wherein R¹ is selected from the list consisting of hydrogen, halo, or alkoxy; and R² and R³ are independently selected from alkyl or phenyl. In particular embodiments, R¹ is selected from the list consisting of hydrogen, halo, or C₁₋₆alkoxy; and R² and R³ are independently selected from C₁₋₆alkyl or phenyl The term "halo" as used herein refers to a halogen atom, more particularly F, Cl, Br, or I. Preferably, "halo" is Cl.

The water repellant agent is a polysiloxane; wherein the core of the plasterboard further comprises one or more clay minerals, more particularly one or more aluminium phyllosilicates selected from the group consisting of kaolinite, illite, halloysite, montomorillonite, vermiculite, talc, sepiolite, palygorkite, and pyrophyllite. A synergy between clay minerals and polysiloxanes can result in significantly improved water repellant properties. In the context of the present invention, the clay minerals as such are not considered a water repellent agent. Preferred clay minerals are kaolinite and/or illite. Most preferably, the clay mineral is or comprises kaolinite.

In particularly preferred embodiments, the plasterboard may comprise a mixture of one or more polysiloxane water repellant agents, and one or more clay minerals.

In particular embodiments, the core comprises one or more silicones an amount ranging from 2400 to 5600 g/m³; and one or more clay minerals. Typically, the total weight of the one or more silicones is between 1 wt% and 50 wt%, based on the total weight of the one or more clay minerals. In further embodiments, the total weight of the one or more silicones is between 5 wt% and 20 wt%, based on the total weight of the one or more clay minerals.

The core comprises one or more clay minerals in a total amount at least 10000 g/m³, preferably ranging from 10 kg/m³ to 50 kg/m³. The plaster composition described herein may further comprise one or more additives such as pigments, fillers, accelerants, retardants, starches, and anti-sagging agents.

Suitable set retarders include, but are not limited to: lysed or degraded proteins such as hydrolytically degraded keratin; hydroxycarboxylic acids or salts thereof, such as citric acid and malic acid; phosphonic acids or salts thereof; and phosphates and salts thereof, such as calcium monophosphate or sodium tripolyphosphate.

In particular embodiments, the gypsum board comprises one of more anti-sagging agents, for example tartaric acid. Such additives can reduce sagging and can improve the racking strength of the resulting plasterboard. In further embodiments, the gypsum board comprises tartaric acid in an amount ranging from 80 g/m³ to 400 g/m³, preferably in an amount ranging from 80 g/m³ to 240 g/m³, for example about 160 g/m³.

In particular embodiments, the core preferably comprises non-fibrous poly(vinyl alcohol) (PVA), or a PVA-poly(vinyl acetate) copolymer comprising at least 50 wt% vinyl alcohol monomers. The addition of PVA may result in an improved bonding between the core and the liners, and may further result in an improved mechanical strength. In preferred embodiments, the core comprises PVA in a range of 2000 g/m³ to 3600 g/m³. The PVA is typically present in the core as a film which wraps the gypsum crystals.

However, it is envisaged that in certain embodiments, the core does not comprise (non-fibrous) PVA. As PVA can cause some foaming, it is preferably not used for the preparation of cores having a very high density, more particularly above 1100 kg/m³, in particular above 1200 kg/m³.

In particular embodiments, the core may comprise starch. The starch may be natural starch; or a starch derivative such as a substituted starch. The starch may be derived from e.g. potato, tapioca, or corn. Starches are often used to improve the adhesion of a facer to a core. It is further thought that substituted starches act as efficient binders for the inorganic phase of plasterboards, e.g. gypsum, thus increasing the core strength of the plasterboard. Preferred substituted starches include, but are not limited to, hydroxyethylated starch, hydroxypropylated starch, and/or acetylated starch. Preferably, the starch is insoluble in cold water, but dissolves at a higher processing temperature during forming, setting, or drying of the plasterboard. This is thought to limit excessive migration of the starch, so that it remains in the plasterboard core, to provide a binder for the gypsum crystals.

The gypsum board described herein preferably is a high density board. The present inventors have found that, together with the presence of a water repellant agent in the core, a high density can increase the water resistance of the boards. More particularly, the present inventors surprisingly found that an increase of the board density allows for reducing the amount of water repellants, while maintaining an excellent water resistance of the core. Moreover, a high density can provide an improved strength. The core has a bulk density of at least 1100 kg/m³, or even at least 1150 kg/m³. In such embodiments, the core preferably comprises one or more fluidizing agents as described above. In preferred embodiments, the core has a bulk density ranging from 1100 kg/m³ to 1225 kg/m³. The gypsum board described herein typically has two opposing faces. In preferred embodiments, at least one face is provided with a liner. More preferably, both faces are provided with such liner. Both faces may be provided with the same type of liner, or a different type. The liner may be a hydrophobic liner, as to further protect the board against moisture.

In particular embodiments, the liner may be a paper liner or glass fiber mat liner. In particular embodiments, the liner comprises at least one ply of a non woven fabric, and a binder composition. In preferred embodiments, the binder composition represents from 10 to 40 wt% of the total weight of the mat; wherein the binder composition comprises a copolymer comprising a co-monomer unit of a vinyl ester of an alpha branched aliphatic monocarboxylic acid, said copolymer being present in an amount from 25 to 100 wt% of the binder composition weight. In further embodiments, the binder composition represents from 15 wt% to 35 wt% of the total mat.

The non-woven fabric may comprise fibers selected from organic fibers, mineral fibers, synthetic polymer fibers, and mixtures thereof. The mineral fibers may be glass and/or basalt fibers. The synthetic fibers may be polyamide fibers, polyaramide fibers, polyethylene fibers, polypropylene fibers and/or polyester fibers. The organic fibers may be cellulose based fibers, such as flax, wood pulp, cotton, sisal, abaca, viscose, rayon and/or lyocel fibers. Preferably these organic fibers represent at least 25 wt% of the non-woven fiber material.

Further described herein is a method as disclosed in appended claims 5-8 for the manufacture a gypsum board as disclosed in appended claims 1-4. Methods for the manufacture of a plasterboard based on a given plaster composition or slurry are well known in the art. A method to provide a gypsum board according to invention as defined in claims 1-4, said method comprises the steps of:
(i) providing an aqueous gypsum slurry to obtain a core according to invention as defined in claims 1-4;
(ii) forming said slurry into a panel; and
(iii) allowing said panel to set, thereby obtaining a plasterboard according to invention as defined in claims 1-4.

In step (i), an aqueous plaster slurry or paste is provided. The slurry may be prepared by mixing plaster with water and additives (such as fluidizing agents, water repellant agents, and fibers) in a mixer as is known in the art. The moment of introduction of the additives is not critical. For example, one or more additives may be introduced directly in the gauge water, or be introduced directly in the mixer.

In preferred embodiments, the slurry or paste comprises plaster (hydratable calcium sulphate), water, a fluidizing agent, a water repellant agent, and glass fibers; in amounts as to allow obtaining a plasterboard as described above.

As described above, the fluidizing agent is preferably selected from the list consisting of a polycarboxylate ether, and a polyphosphonate polyoxyalkylene; and preferably salts thereof.

In preferred embodiments, the plaster slurry or paste has a low water to plaster ratio; i.e. the weight of the gauging water in the paste or slurry over the dry weight of the plaster in this slurry or paste. It was found that, for a given density of the final plasterboard, the reduction of the water to plaster ratio tends to increase the compressive strength of the board. More particularly, the plaster slurry or paste may have a water to plaster ratio less than or equal to 0.70; i.e. at most 0.70 parts of water for 100 parts of plaster (parts by weight). According to some embodiments, the water to plaster ratio may be less than or equal to 0.65, or even less than or equal to 0.60, or even less than or equal to 0.55. In particular embodiments, the water to plaster ratio ranges from 0.45 to 0.70, preferably from 0.45 to 0.63, more preferably 0.45 to 0.60. In specific embodiments, the water to plaster ratio may range from 0.50 to 0.70; or from 0.50 to 0.63.

Together, the plaster and gauging water typically form at least 82 wt% of the slurry, preferably at least 85 wt%, more preferably at least 90 wt%.

Preferably, the plaster has a calcium sulphate HH content of at least 93 wt% (based on the total weight of the plaster), preferably more than 94 wt%. The plaster used in the slurry may be obtained from synthetic or natural gypsum; and is preferably obtained from synthetic gypsum, such as DSG.

The plaster slurry or paste comprises a water repellant agent as described above. Additionally or alternatively, the slurry or paste may contain one or more compounds that cure to form a hydrophobic silicone resin in an alkaline environment; preferably at a pH ranging from 7.5 to 9.5. Examples of suitable compounds include but are not limited to alkyl and/or vinyl alkoxysilanes; alkyl and/or vinyl siloxanes; alkyl and/or vinyl silanols; alkyl siliconates; and mixtures thereof.

The plasterboards described herein preferably are high density boards. Accordingly, the slurry used in step (i) will typically not comprise (dedicated) foaming agents. Preferably, the slurry is essentially free of alkylsulphates, alkylethersulphates, alkylethercarboxylates, ethoxylated alkylphenols, alkylsulphonates, alkylpolyglucosides, betaines, amine oxydes, alkylpolysaccharides, and alkylsulfosuccinates.

In particular embodiments, the plaster slurry comprises:
- water and plaster (hydratable calcium sulphate), wherein the water to plaster ratio ranges from 0.45 to 0.70;
- one or more polycarboxylate ether fluidizing agents, in a total amount ranging from 0.18 wt% to 2.0 wt% based on the dry weight of said plaster;
- 0.1 wt% to 2.0 wt% of a silicone based water repellant agent;
- 0.5 wt% to 10 wt% of a clay mineral, based on the dry weight of said plaster; and ;
- glass fibers in a total amount ranging from 0.25 wt% to 5 wt%, based on the dry weight of said plaster.

In particular embodiments, the plaster slurry comprises:
- water and plaster (hydratable calcium sulphate), wherein the water to plaster ratio ranges from 0.45 to 0.70;
- one or more polycarboxylate ether fluidizing agents, in a total amount ranging from 0.2 wt% to 1.5 wt% based on the dry weight of said plaster;
- 0.1 wt% to 1.0 wt% of a silicone based water repellant agent;
- 1.0 wt% to 5.0 wt% of a clay mineral, based on the dry weight of said plaster; and
- glass fibers in a total amount ranging from 0.3 wt% to 1.5 wt%, based on the dry weight of said plaster.

In particular embodiments, the plaster slurry comprises:
- water and plaster (hydratable calcium sulphate), wherein the water to plaster ratio ranges from 0.45 to 0.70;
- one or more polycarboxylate ether fluidizing agents, in a total amount ranging from 0.3 wt% to 1.5 wt% based on the dry weight of said plaster;
- 0.1 wt% to 1.0 wt% of a silicone based water repellant agent;
- 1.0 wt% to 5.0 wt% of a clay mineral, based on the dry weight of said plaster; and
- glass fibers in a total amount ranging from 0.3 wt% to 1.5 wt%, based on the dry weight of said plaster.

In particular embodiments, the plaster slurry comprises:
- water and plaster (hydratable calcium sulphate), wherein the water to plaster ratio ranges from 0.45 to 0.60;
- one or more polycarboxylate ether fluidizing agents, in a total amount ranging from 0.3 wt% to 1.0 wt% based on the dry weight of said plaster;
- 0.1 wt% to 0.8 wt% of a silicone based water repellant agent;
- 1.0 wt% to 5.0 wt% of a clay mineral, based on the dry weight of said plaster; and
- glass fibers in a total amount ranging from 0.3 wt% to 1.5 wt%, based on the dry weight of said plaster.

The plaster typically is provided as a powder. The particle size of the plaster in the slurry usually is smaller than the original particle size of the dry plaster before mixing into the slurry. The particle size can be expressed by d50. The term "d50" in the sense of the present invention is a measure for the average particle size and is defined as follows: 50% (by number) of the particles (e.g. grains) in the corresponding sample have a size which is equal or smaller than the given d50 value. The term "particle size" especially represents the diameter of a sphere whose volume is identical to that of the particle under consideration having an arbitrary shape. The particle sizes referred to herein can be measured using Laser Diffraction Spectrometry (LDS), more particularly according to ISO13320-1:1999. For the measurements, the plaster is preferably dispersed in alcohol such as isopropanol, as to avoid hydration of the plaster. Prior to the measurement, the plaster in alcohol may be subject to ultrasound for a duration of 2 minutes in order to obtain an optimal dispersion of the particles.
In particular embodiments, the dry plaster (i.e. before mixing with water) has a d50 ranging from 0.5 µm to 150 µm, preferably ranging from 1.0 µm to 50 µm, and more preferably ranging from 2 µm to 25 µm, for example about 7 µm. In particular embodiments, the dry plaster has a d50 ranging from 10 to 100 µm before mixing, preferably ranging from 15 to 75 µm.

In step (ii) the plaster composition is formed into a panel. This can be done using known methods. Typically, the plaster composition is deposited between two facers or liners, i.e. sheets of covering material. Then, the slurry is formed or pressed into a panel. Typically the gypsum slurry is cast on top of one such liner, and the second liner may be provided after this casting. The gypsum slurry may be squeezed between said liners. The liners or facers may comprise or are made of paper or cardboard; and/or may comprise a non-woven fabric comprising mineral, glass, and/or polymer fibers. The panel produced in step (ii) is of indefinite length, and will be cut to the required size.

In step (iii), the panel obtained in step (b) is allowed to set. More particularly, the plaster composition in the panel is allowed to set. This is well known in the art. Typically, the method described herein will also comprise the step of drying the panel. Drying is typically performed in a drier at elevated temperature, preferably the drier temperature is set between 100°C and 250°C. The actual temperature of the plasterboard during drying preferably does not exceed 100°C. Drying typically occurs after the setting of the panel. More particularly, the rehydration rate is preferably as close as possible to 100%, preferably at least 97%.

### EXAMPLES

The following examples are provided for the purpose of illustrating the present invention and by no means are meant and in no way should be interpreted to limit the scope of the present invention Slurry 1 and Board 1 are not according to the invention.

### 1. Plasterboard preparation

### 1.1 Plaster slurry preparation

Plasterboards were prepared from five different plaster slurries. The plaster slurries were prepared by dispersing plaster obtained from DSG in water at a water/plaster ratio as in Table 1. The slurries also comprise other components as set out in Table 1. All amounts in Table 1 are expressed in wt% versus the total weight of plaster. In contrast with the remainder of the present description, the DSG plaster weight in Table 1 is the weight including impurities (less than 5wt% of the DSG plaster). Slurries 4 and 5 are made from a different batch of plaster than slurries 1 to 3.

In all slurries, the same type of silicone, clay, fluidizer, glass fibers, PVA powder, tartaric acid, and fungicide were used. The fluidizer is a polyether polycarboxylate (PCP) sodium salt (Ethacryl™ M, available from Coatex). The glass fibers are of E-glass and have a diameter of about 13 µm and a length of about 13 mm. The clay is kaolinite.

**Table 1 - Composition of plaster slurries used for the manufacture of plasterboard**

| | **Slurry 1** | **Slurry 2** | **Slurry 3** | **Slurry 4** | **Slurry 5** |
|---|---|---|---|---|---|
| **DSG plaster** | 100 | 100 | 100 | 100 | 100 |
| **Total gauging water** | 69 | 59.5 | 53.2 | 52.3 | 53 |
| **Silicone** | 0.5 | 0.36 | 0.33 | 0.33 | 0.33 |
| **Clay mineral** | 5 | 2.7 | 2.5 | 2.47 | 2.48 |
| **Fluidizer** | 0.35 | 0.64 | 0.83 | 0.82 | 0.83 |
| **Glass fibers** | 1 | 0.91 | 0.41 | 0.41 | 0.83 |
| **PVA powder** | 0.35 | 0.23 | 0 | 0 | 0 |
| **Tartaric acid** | 0.02 | 0.02 | 0.02 | 0.02 | 0.02 |
| **Fungicide** | 0.08 | 0.07 | 0.07 | 0.07 | 0.07 |
| **Retarder** | 0.004 | 0.006 | 0.006 | 0.006 | 0.006 |
| **Accelerator** | 0.26 | 0.27 | 0.37 | 0.31 | 0.31 |
| **Starch** | 0.35 | 0.27 | 0.25 | 0.25 | 0.25 |

### 1.2 Plasterboard preparation

Each of the slurries 1-5 described above was used for the manufacture of plasterboard. The boards were manufacture on a standard gypsum board production line, wherein the slurry was cast between two layers of a liner. The liner is made of a non-woven fabric comprising a mixture of glass fibers and cellulose fibers; and has a basic weight of 120 g/m² and a thickness of about 300 µm. Although all boards were made with the same type of liner, boards 4 and 5 were made with older liner reels. After casting the slurry, the plaster was allowed to set and the obtained panels were dried.

### 2. Plasterboard characterization

Various properties of the boards were tested and were compared to the properties of two commercially available boards having the same thickness: GTEC® Ladura (Siniat) and Fermacell® Gypsum Fibreboard. The GTEC® Ladura is classified as a gypsum hard board (GHB) and is stronger, harder, and heavier than standard plasterboard. The core comprises plaster, and hard wood fibers and glass fibres entrapped in the core. The Fermacell® board is a high density board which is marketed as having a good moisture resistance, and has a core comprising gypsum and paper fibers.

Gypsum boards such as Ladura and Fermacell® are often used as racking boards on the internal side of external walls having a timber frame. For the external side of such wall, it is customary to use an Oriented Strand Board (OSB) protected with a rain screen membrane, more particularly OSB Class 3 according to EN 335 (timber for exterior applications, frequent humidification on short periods).

### 2.1 Weight and thickness

The board density, weight, and thickness of all boards were measured. The results are set out in Table 2. The results show that by reducing the water to plaster ratio, high board densities can be obtained. The loss in slurry fluidity by reducing the water to plaster ratio can be compensated via the addition of a fluidizer.

**Table 2 - Characteristics of plasterboards**

| | **Board 1** | **Board 2** | **Board 3** | **Board 4** | **Board 5** | **Ladura** | **Fermacell** |
|---|---|---|---|---|---|---|---|
| **Slurry** | Slurry 1 | Slurry 2 | Slurry 3 | Slurry 4 | Slurry 5 | n/a | n/a |
| **Board density (kg/m³)** | 1036 | 1105 | 1189 | 1218 | 1215 | 1056 | 1150 |
| **Board weight (kg/m²)** | 12.95 | 13.95 | 15.14 | 15.25 | 15.38 | 13.08 | 14.37 |
| **Board thickness (mm)** | 12.5 | 12.62 | 12.73 | 12.52 | 12.66 | 12.22 | 12.5 |

### 2.2 Water absorption properties

The water absorption properties of the boards were assessed via Cobb two hours (2H) according to EN 520 and water absorption 2H tests according to EN 520 and EN15 283-1. The results are summarized in Table 3. Boards 1-5 shows excellent water absorption properties compared to the LaDura and Fermacell® boards, both on the surface and in the core. Although the water absorption properties were excellent for all boards, a higher water absorption was observed for boards 4 and 5 compared to boards 1 to 3, which can be attributed to the differences in plaster and liner.

**Table 3 - Rehydratation and water absorption properties**

| | **Board 1** | **Board 2** | **Board 3** | **Board 4** | **Board 5** | **LaDura** | **Fermacell®** |
|---|---|---|---|---|---|---|---|
| **Surface water absorption (2H) (g/m²)** | 72 | 65 | 56 | 113 | 108 | ≤180 | > 300 |
| **Total water absorption (%)** - **With liner** | 1.6 | 1.45 | 1.22 | 2.32 | 2.88 | ≤ 5 | n/a (no liner) |
| **Total water absorption (%)** - **Without liner** | 1.34 | 1.88 | 1.46 | 2.01 | 2.83 | n/a | > 10 |

### 2.3 Flexural strength

The flexural strength of all boards was tested. The test results are summarized in Table 4. The dry bending or flexural strength was tested in the longitudinal direction (machine direction, MD) as well as the transversal direction (cross direction, CD) according to EN 15 283-1. The humid breaking or flexural strength was tested in the longitudinal direction as well as the transversal direction according to EN 15 283-1, after conditioning 7 days at 30°C and 90% relative humidity. The breaking load after 2 hours immersion in water was tested according to EN 15 283-1. The results show a clearly improved Young's modulus (E modulus) and breaking load (both in machine direction and in cross direction) for boards 1-5, compared to the LaDura and Fermacell® boards. The high strength of boards 4 and 5 are particularly surprising, in view of the slightly worse water absorption properties. For boards 3 to 5, the humid flexural strength is even better than the dry flexural strength of LaDura and Fermacell® boards. Without wishing to be bound by theory, the high E modulus is believed to be influenced mainly by the density of the boards, whereas the increased breaking load is mainly achieved by the high glass fiber content.

**Table 4 - Mechanical properties**

| | **Board 1** | **Board 2** | **Board 3** | **Board 4** | **Board 5** | **LaDura** | **Fermacell** |
|---|---|---|---|---|---|---|---|
| ***Dry flexural Strength* - *MD*** | | | | | | | |
| E modulus (N /mm²) | 5200 | 6100 | 6720 | 7230 | 7010 | 5190 | 4080 |
| Breaking load (daN) | 107 | 109 | 102 | 85.8 | 100 | 75 | 54 |

| ***Dry flexural Strength* - *CD*** | | | | | | | |
|---|---|---|---|---|---|---|---|
| E modulus (N/mm²) | 4244 | 5130 | 5740 | 6310 | 6010 | 4170 | 3800 |
| Breaking load (daN) | 48 | 39 | 41 | 41 | 60 | 34 | 38.5 |

| ***Humid flexural Strength (days 30°C 90% RH)* - *MD*** | | | | | | | |
|---|---|---|---|---|---|---|---|
| E modulus (N /mm²) | 4250 | 4770 | 5610 | 5560 | 5790 | n/a | 2570 |
| Breaking load (daN) | 98 | 97 | 89 | 71 | 93 | n/a | 30.5 |

| ***Humid flexural Strength (7 days 30°C 90% RH)* - *CD*** | | | | | | | |
|---|---|---|---|---|---|---|---|
| E modulus (N /mm²) | 3150 | 4280 | 4790 | 5010 | 5060 | n/a | n/a |
| Breaking load (daN) | 41 | 47 | 48 | 43 | 43 | n/a | n/a |

| ***Flexural strength after* 2 *hours immersion* - *MD*** | | | | | | | |
|---|---|---|---|---|---|---|---|
| E modulus (N /mm²) | 1640 | 3010 | 3335 | 4245 | 3900 | n/a | n/a |
| Breaking load (daN) | 64 | 71 | 64 | 45 | 59 | n/a | n/a |

| ***Flexural strength after* 2 *hours immersion* - *CD*** | | | | | | | |
|---|---|---|---|---|---|---|---|
| E modulus (N /mm²) | 1720 | 2510 | 3490 | 3575 | 3710 | n/a | n/a |

### 2.4 Compressive strength

The compressive strength (compression strength) of the boards was measured from a 5x5 cm² sample withdrawn from the board, according to standard ASTM C473-12. The results are summarized in Table 5, and show a significant increase of the board strength compared to the LaDura and Fermacell® panels. For all of boards 1 to 5, the humid compressive strength is even better than the dry compressive strength of LaDura and Fermacell®. For boards 4 and 5, the immersed strength is still better than the dry compressive strength of LaDura and Fermacell®. This is particularly surprising giving the less favorable water absorption properties compared to boards 1 to 3.

**Table 5 - Compressive strength (all values in N/mm²)**

| | **Board 1** | **Board 2** | **Board 3** | **Board 4** | **Board 5** | **LaDura** | **Fermacell** |
|---|---|---|---|---|---|---|---|
| **Dry strength (N/mm²)** | 17.3 | 20.8 | 25 | 28.7 | 28.7 | 10.8 | 9.9 |
| **Humid strength (7 days 30°C, 90%RH)** | 11.2 | 12.1 | 15.1 | 17.9 | 18.2 | n/a | 5.3 |
| **Immersed strength (2 Hours)** | 7.3 | 8.6 | 10.6 | 11.7 | 12.5 | n/a | 2.3 |

### 2.5 Embedment strength

The embedment strength of Boards 1 to 5 was measured according to EN 383. The test method aims to evaluate the shear resistance of pins in the board in ambient conditions (23°C, 50%RH). Additionally to the normal conditions defined in EN 383, tests were carried out on boards according to the invention after 2 hours immersion in water. Three pin diameters are generally tested as to simulate typical fixing diameters (2.5 mm, 3.0 mm, and 3.5 mm), and in the machine direction as well as the cross direction. The results were averaged and are summarized in Table 6, and show an increase of the embedment strength of Boards 1 to 5 when compared to the LaDura and Fermacell® boards. The embedment strength is a major parameter for the calculation of the racking resistance of timber walls according to Eurocode 5. Accordingly, boards 1 to 5 can be expected to provide an improved racking resistance compared to the LaDura and Fermacell® boards.

**Table 6 - Embedment strength**

| | **Board 1** | **Board 2** | **Board 3** | **Board 4** | **Board 5** | **LaDura** | **Fermacell** |
|---|---|---|---|---|---|---|---|
| **Dry Embedment strength (N/mm²)** | 33.5 | 43.1 | 42.1 | 58,5 | 54,5 | 23.9 | 31.9 |
| **Immersed Embedment strength (N/mm²)** | 20.2 | 22.2 | 25.1 | 26,8 * | 30,5 * | n/a | n/a |

| | | | | | | | |
|---|---|---|---|---|---|---|---|
| * Machine direction and cross direction values for 3.0 mm pin only | | | | | | | |

### 2.6 Safety factor (K mod)

The K mod is a safety factor that is used together with the embedment strength in the calculation of racking strength according to Eurocode 5 (EN 1995-1-2). The closer the K mod is to 1, the higher the calculated racking strength. This factor takes into account the influence of the duration of the load applied to boards in several climatological conditions, and is determined according to EN 1156 ("Wood based panel. Determination of duration of load and creep factors"). Tests were done for three service classes: Class 1 (ambient conditions, i.e. 20°C and up to 65% RH), Class 2 (semi humid conditions, i.e. 20°C and up to 85% RH), and Class 3 (humid and very humid conditions, i.e. 20°C and more than 85% RH). The Ladura and Fermacell® are not allowed for Class 3 due to their sensitivity to moisture. Accordingly, no Class 3 K mod is provided for these boards.

The K mod factor of Board 1 was tested and was found to be higher than the K mod factor of the Ladura and Fermacell® boards. Together with the improved embedment strength, this means that Board 1 also has an increased racking strength.

**Table 7 - K mod factor**

| | **Board 1** | **LaDura** | **Fermacell®** |
|---|---|---|---|
| **Class 1** | 1 | 0.85 | 0.8 |
| **Class 2** | 1 | 0.7 | 0.6 |
| **Class 3** | 0.9 | n/a * | n/a * |

| | | | |
|---|---|---|---|
| * Not allowed in Class 3. | | | |

In view of the above results, it is clear that the gypsum board described herein is highly suitable for use outdoor or in wet areas. The product is particularly suitable to be used in external walls having a timber frame or metal frame as a support.

## Claims

1. The gypsum board comprising a core, **characterised in that** said core has a bulk density of at least 1100 kg/m³ and comprises:
- from 70 wt% to 97 wt% gypsum;
- one or more polycarboxylate ether fluidizing agents, in a total amount of at least 6000 g/m³;
- at least 2500 g/m³ of a polysiloxane;
- at least 10000 g/m³ of one or more clay minerals; and
- at least 3200 g/m³ of glass fibers.

2. The gypsum board according to claim 1, wherein said core comprises glass fibers in an amount ranging from 3200 to 12000 g/m³.

3. The gypsum board according to any one of claims 1 to 2, wherein said core has a compressive strength of at least 20 N/mm², as measured according to standard ASTM C473-12.

4. The gypsum board according to any one of claims 1 to 3, wherein said core has two faces, and wherein at least one of said faces is provided with a liner.

5. A method to provide a gypsum board according to any one of claims 1 to 4, said method comprises the steps of:
(i) providing an aqueous gypsum slurry to obtain a core according to any one of claims 1 to 4
(ii) forming said slurry into a panel; and
(iii) allowing said panel to set, thereby obtaining a plasterboard according to any one of claims 1 to 4.

6. The method according to claim 5, wherein said slurry comprises:
- water and plaster, wherein the water to plaster ratio is equal to or below 0.70;
- one or more polycarboxylate ether fluidizing agents, in a total amount ranging from 0.2 wt% to 2.0 wt% based on the dry weight of said plaster;
- 0.1 wt% to 2.0 wt% of a silicone based water repellant agent;
- 0.1 wt% to 10 wt% of a clay mineral, based on the dry weight of said plaster; and
- glass fibers in a total amount ranging from 0.25 wt% to 1.5 wt%, based on the dry weight of said plaster.

7. The method according to claim 5 or 6, wherein said slurry has a water to plaster ratio ranging from 0.45 to 0.70.

8. The method according to any one of claims 5 to 7, wherein said slurry has a water to plaster ratio ranging from 0.45 to 0.63; and wherein said slurry comprises said one or more polycarboxylate ether fluidizing agents in a total amount ranging from 0.5 wt% to 2.0 wt% based on the dry weight of said plaster.

## Patentansprüche

1. Gipsplatte, umfassend einen Kern, **dadurch gekennzeichnet, dass** der Kern eine Rohdichte von mindestens 1100 kg/m³ aufweist und umfasst:
- zu von 70 Gew.-% bis 97 Gew.-% Gips;
- ein oder mehrere Polycarboxylatether-Fluidisierungsmittel in einer Gesamtmenge von mindestens 6000 g/m³;
- zu mindestens 2500 g/m³ ein Polysiloxan;
- zu mindestens 10000 g/m³ ein oder mehrere Tonmineralien; und
- zu mindestens 3200 g/m³ Glasfasern.

2. Gipsplatte nach Anspruch 1, wobei der Kern Glasfasern in einer Menge im Bereich von 3200 bis 12000 g/m³ umfasst.

3. Gipsplatte nach einem der Ansprüche 1 bis 2, wobei der Kern eine Druckfestigkeit von mindestens 20 N/mm², gemessen gemäß ASTM-Norm C473-12, aufweist.

4. Gipsplatte nach einem der Ansprüche 1 bis 3, wobei der Kern zwei Flächen aufweist und wobei mindestens eine der Flächen mit einer Auskleidung versehen ist.

5. Verfahren zum Bereitstellen einer Gipsplatte nach einem der Ansprüche 1 bis 4, wobei das Verfahren die Schritte umfasst:
(i) Bereitstellen einer wässrigen Gipsaufschlämmung, um einen Kern nach einem der Ansprüche 1 bis 4 zu erhalten;
(ii) Formen der Aufschlämmung zu einer Platte; und
(iii) Abbindenlassen der Platte, wodurch eine Gipsplatte nach einem der Ansprüche 1 bis 4 erhalten wird.

6. Verfahren nach Anspruch 5, wobei die Aufschlämmung umfasst:
- Wasser und Gips, wobei das Verhältnis von Wasser zu Gips gleich oder kleiner als 0,70 ist;
- ein oder mehrere Polycarboxylatether-Fluidisierungsmittel in einer Gesamtmenge im Bereich von 0,2 Gew.-% bis 2,0 Gew.-%, bezogen auf das Trockengewicht des Gipses;
- zu 0,1 Gew.-% bis 2,0 Gew.-% ein wasserabweisendes Mittel auf Silikonbasis;
- zu 0,1 Gew.-% bis 10 Gew.-% ein Tonmineral, bezogen auf das Trockengewicht des Gipses; und
- Glasfasern in einer Gesamtmenge im Bereich von 0,25 Gew.-% bis 1,5 Gew.-%, bezogen auf das Trockengewicht des Gipses.

7. Verfahren nach Anspruch 5 oder 6, wobei die Aufschlämmung ein Verhältnis von Wasser zu Gips im Bereich von 0,45 bis 0,70 aufweist.

8. Verfahren nach einem der Ansprüche 5 bis 7, wobei die Aufschlämmung ein Verhältnis von Wasser zu Gips im Bereich von 0,45 bis 0,63 aufweist; und wobei die Aufschlämmung das eine oder die mehreren Polycarboxylatether-Fluidisierungsmittel in einer Gesamtmenge im Bereich von 0,5 Gew.-% bis 2,0 Gew.-%, bezogen auf das Trockengewicht des Gipses, umfasst.

## Revendications

1. Plaque de gypse comprenant une âme, **caractérisée en ce que** ladite âme a une masse volumique d'au moins 1100 kg/m³ et comprend :
- de 70 % en poids à 97 % en poids de gypse ;
- un ou plusieurs agents fluidifiants éther de polycarboxylate, en une quantité totale d'au moins 6000 g/m³ ;
- au moins 2500 g/m³ d'un polysiloxane ;
- au moins 10 000 g/m³ d'un ou plusieurs minéraux d'argile ; et
- au moins 3200 g/m³ de fibres de verre.

2. Plaque de gypse selon la revendication 1, dans laquelle ladite âme comprend des fibres de verre en une quantité allant de 3200 à 12 000 g/m³.

3. Plaque de gypse selon l'une quelconque des revendications 1 à 2, dans laquelle ladite âme a une résistance en compression d'au moins 20 N/mm², telle que mesurée selon la norme ASTM C473-12.

4. Plaque de gypse selon l'une quelconque des revendications 1 à 3, dans laquelle ladite âme a deux faces, et dans laquelle au moins l'une desdites faces est pourvue d'un revêtement.

5. Procédé pour fournir une plaque de gypse selon l'une quelconque des revendications 1 à 4, ledit procédé comprend les étapes consistant à :
(i) fournir une bouillie aqueuse de gypse pour obtenir une âme selon l'une quelconque des revendications 1 à 4 ;
(ii) former ladite bouillie en un panneau ; et
(iii) laisser durcir ledit panneau, ce qui permet d'obtenir une plaque de plâtre selon l'une quelconque des revendications 1 à 4.

6. Procédé selon la revendication 5, dans lequel ladite bouillie comprend :
- de l'eau et du plâtre, dans lequel le rapport de l'eau au plâtre est égal ou inférieur à 0,70 ;
- un ou plusieurs agents fluidifiants éther de polycarboxylate, en une quantité totale allant de 0,2 % en poids à 2,0 % en poids sur la base du poids sec dudit plâtre ;
- 0,1 % en poids à 2,0 % en poids d'un agent hydrofuge à base de silicone ;
- 0,1 % en poids à 10 % en poids d'un minéral d'argile, sur la base du poids sec dudit plâtre ; et
- des fibres de verre en une quantité totale allant de 0,25 % en poids à 1,5 % en poids, sur la base du poids sec dudit plâtre.

7. Procédé selon la revendication 5 ou 6, dans lequel ladite bouillie a un rapport de l'eau au plâtre allant de 0,45 à 0,70.

8. Procédé selon l'une quelconque des revendications 5 à 7, dans lequel ladite bouillie a un rapport de l'eau au plâtre allant de 0,45 à 0,63 ; et dans lequel ladite bouillie comprend ledit ou lesdits agents fluidifiants éther de polycarboxylate en une quantité totale allant de 0,5 % en poids à 2,0 % en poids sur la base du poids sec dudit plâtre.
